# EUROPEAN PATENT SPECIFICATION

(11) **EP 3 106 026 B1**
(45) Date of publication and mention of the grant of the patent: **13.01.2021**
(21) Application number: 15425044.3
(22) Date of filing: 16.06.2015
(51) Int. Cl.: A01G 9/12, A01G 17/06, A01G 22/05

(54) **TUTORING SYSTEM FOR GREENHOUSE CULTIVATION**
TUTORENSYSTEM FÜR GEWÄCHSHAUSANBAU
SYSTÈME DE TUTEURS PERMETTANT UNE CULTURE EN SERRE

(43) Date of publication of application: 21.12.2016
(73) Proprietor: Avarino, Gioacchino, 97019 Vittoria (Ragusa) (IT); Avarino, Giovanna Sonia, 97019 Vittoria (Ragusa) (IT)
(72) Inventor: Avarino, Gioacchino, 97019 Vittoria (Ragusa) (IT); Avarino, Giovanna Sonia, 97019 Vittoria (Ragusa) (IT)
(74) Representative: De Tullio, Michele Elio

(56) References cited:
- DE-C- 872 411
- GB-A- 772 874
- GB-A- 1 276 944
- US-A1- 2004 093 792

## Description

### FIELD OF INVENTION

The present invention relates to a tutoring system for greenhouse cultivation. Particularly, it relates to a tutoring system for vertical crops in greenhouse that is aimed to replace the current practice of tying the plants realized manually.

### BACKGROUND OF THE INVENTION

For some particular plants so-called creeping, for example, the Solanaceae such as tomato, cucumber, etc., grown in greenhouse, the use of variety or hybrid with an indeterminate development (i.e. continuously growing) are mostly used, which necessitate the use of stakes, or supports, able to maintain upright the plant during its development.

The tutors can be arranged in various ways: fixed on each plant to favour a better aeration of the culture, placed in a tripod or arranged in rows, secured with galvanized iron wires anchored to the ground.

In open fields crops, on small areas or in small-medium farms, such as family-owned farms, or small hobby structures, the tutoring of tomato plants, such as table tomato plants, is commonly performed using wires of rope and bamboo canes, or other widely available and low cost materials, arranged according to a "triangle" (two plants per triangle) or "castle" (four plants for each castle) arrangement; in order to make the tutors more stable, each triangle or castle is fixed to canes or iron wires tight on the greenhouse structure.

In professional farms, in under shelter coltures, tutoring of such plants is usually made in small tunnel and consists of a supporting tying through cords made of nylon or plastic material, so-called tutor ropes, descending on the crop.

These tutor ropes, tight and secured on bearing stringers made of iron wire longitudinally arranged in the direction of the row of plants at eave height and positioned at the same plant distance of the plants, are subsequently hooked to the foot or the collar of the plant, to the stem or to the main branches.

For the cultivations of table tomatoes, gathered at the ripening stage, bred to 5-7 fruiting stages, the iron support ropes are placed at about 1.5 - 2 m from the ground, while as for the varieties indicated for the detachment when fruits are fully ripe (Dutch types) any tutor must be located at a height of 2.5 - 3 m.

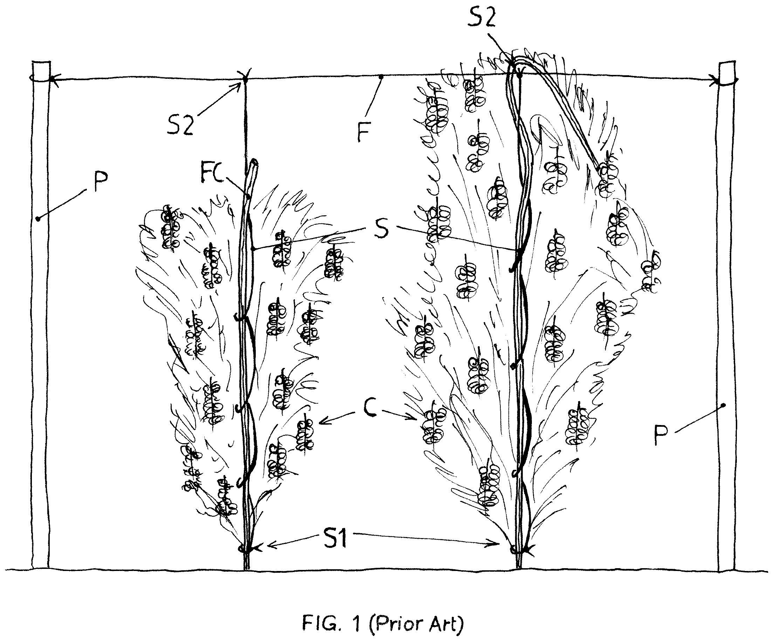

An application of said tutoring system, illustrated in Figure 1, currently used for example for the greenhouse cultivation of cherry tomato plants , is based on the following steps:
1) fix wooden P poles that will act as support to the entire structure (for example, at a distance of about 2.5 meters);
2) connecting said P poles (on the top) using the iron wire F, not too thick;
3) cut a proper piece of a rope S and tie one of its end S1 to the base of the stem of the plant C;
4) rotate the rope S around the main stem FC in order to harness the plant C;
5) attach the other end S2 of the rope S to the guide iron wire F, creating tension;
6) as the plant C grows, is spun around the said rope S up to the iron wire F;
7) trim the plant C, or alternatively fold onto itself, in order to complete its production phase, or alternatively lower it untying and retying the tutor rope S.

The practices in said point 7), which are required to ensure a regular development, a better exposure and aeration of the culture, distancing the top of the plant from the high temperatures at the height of the greenhouse plastic, are important for plant health and the maximum photosynthetic efficiency.

It is known in the state of art the document DE 872 411 C which illustrates a tutoring apparatus suitable for greenhouse cultivation consisting of a grid (see figure 1, 3, 4), for tying plants placed in a vertical or diagonal position, composed of a lower base horizontal string, horizontal support strings parallel to said base string, a top string located in parallel to the preceding strings and vertical tutor strings.

They however have some drawbacks.

The plant bent on itself represents an obstacle between the parallel plant rows and between itself and the other plants of the same row; in general, since plants can significantly grow and two-three stems per plant are bred, it should be planted no more than two plants per square meter (for example 90 cm between rows and 50 cm on the row); if certain varieties of plants are available three plants per square meter (80 cm between rows and 40 cm on the row) can be planted.

Until now this problem has been solved by bringing down the plant untying and retying the tutor rope using iron hooks to which the rope is wrapped and as each plant grows about 30 cm of rope is untied lowering the plant.

Lowering the plant when it has reached the eave height, untying and retying the tutor rope, is an operation that is repeated dozens of times, until it is decided to stop the production, and that requires substantial resources in terms of labour and time: put into practical terms, it requires significant production costs.

### SUMMARY OF THE INVENTION

The main object of the present invention is to provide an efficient technical solution, which is able to improve the operating conditions of the greenhouse vegetable production, through a tutoring system for vertical crops in greenhouse that aims at replacing the current practice of tying plants performed manually.

In particular, the aim of the present invention is to avoid the costs in terms of time and labour improving both the productivity of the agricultural product and its quality thanks to the decrease of treatments.

In other words, eliminating labour costs to perform the following tasks related to the current tutoring systems for crops creeping in greenhouse:
- cutting of ropes to a proper length,
- tying the ropes at the base of the plants,
- tying on top to the support wire.

A further aim of the present invention is to eliminate the use of ladders or carriages that are normally used to carry out the various works of cutting and tying, when the plants growing exceed the operator's height.

Another purpose is to prevent lacerations of plants' bark due to its tying with the ropes, thereby avoiding the negative consequences on the lymphatic exchange of the plants.

A problem solved by the present invention is also to allow the plants to grow vertically, which is the way in which the plants express the maximum of their vigour, providing them with more space and ensuring a greater aeration and better positioning of the leaves with respect to the solar rays.

For the above aims, the present invention provides an innovative tutoring system for vertical crops in greenhouse that is proposed to replace the current practice of manually untying and retying of tutor ropes for the tying of vertically placed, in order to lower the plant when it has reached the eave height of the greenhouse, through a dynamic system that allows automatic lowering of the top of said plants by means of quick and easy operations.

A modular division of the system allows, when the crop reach the eave height, the lowering, with cutting tutor ropes or tutor strings appropriately arranged, of each plant or of an entire plants row and then the continuation of growth of the same culture.

In other words, the system provides a method that allows the lowering of each plant recovering the empty space that is created around it as the fruit is picked.

In addition, the lowering of each plant allows easier operations carried out on it, and the removal of the plant's top from the high temperatures at the height of the greenhouse.

The tutoring system in greenhouse according to the present invention, therefore allows the following advantages:
- reduction of the labour costs for the tying and cutting of tutor cords;
- reduction of the labour costs for the bending and shearing of the plants;
- elimination of equipment, such as ladders, carriages and wooden benches to reach the top of the plants with a resulting reduction of the operator's effort;
- saving in the treatments and increase of productivity and quality of the obtained fruits, since the plants grow according to a more regular development, through better exposure and aeration of the crop due to the ease with which they are distanced from the high temperatures at the eave height of the plastic greenhouse, improving therefore the plant's health and photosynthetic efficiency.

### BRIEF DESCRIPTION OF THE DRAWINGS

Further advantages and features of the present invention will be evident thanks to the following description of some embodiments, shown by way of non-exclusive example, of tutoring systems for greenhouse cultivation illustrated with reference to the accompanying drawings that illustrate, respectively:
- figura 1 -: a schematic front view of an application of the tutoring system currently in use in the state of art;
- figura 2 -: a.schematic front view of an implementation, for plants placed in a vertical position, of the tutoring system according to the present invention consisting of a top grid equipped with diagonal and vertical descents and a lower grid equipped with tying;
- figura 3 -: a schematic front view of the tutoring system in Figure 2 during its activation;
- figura 4 -: a schematic front view of a second implementation, for plants placed in a diagonal position, of the tutoring system according to the present invention consisting of a top grid provided with vertical descent and a lower grid equipped with tying;
- figura 5 -: a schematic front view of the tutoring system in Figure 4 during its activation.

### DETAILED DESCRIPTION OF THE INVENTION

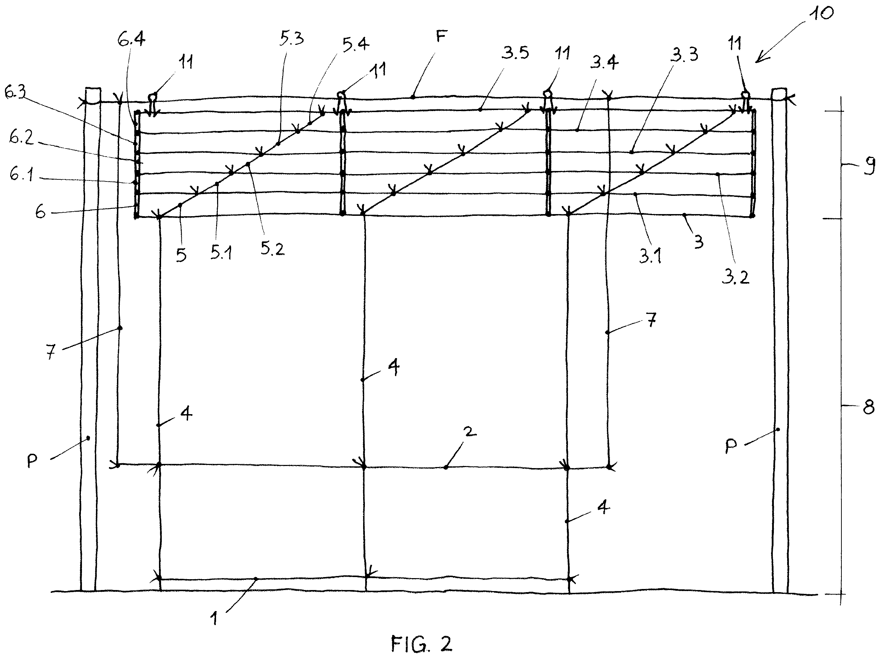

The tutoring system according to the present invention illustrated in a preferred embodiment in Figure 2, in its application for the tying of plants placed in a vertical position, comprises a lower grid 8 composed of:
- a base rope 1 placed at the bottom in a horizontal position in parallel and almost in contact with the ground,
- a horizontal support rope 2 placed in parallel at one meter by said base rope 1,
- a horizontal top rope 3 located in parallel to the preceding,
- ropes 4, tutor ropes, one for each plant, placed in a vertical position and joined or tied from one end at the bottom with the base rope 1, from the other end at the top with the top rope 3.

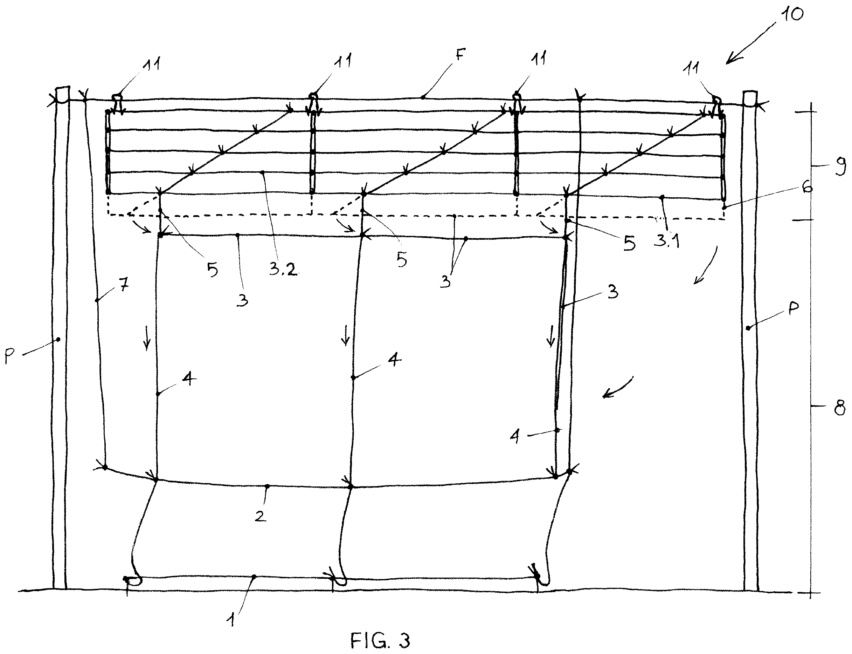

In parallel to the horizontal top rope 3 are placed further parallel horizontal ropes 3.1, 3.2, ..., 3.n (in Figures 2 and 3 up to 3.5), reciprocally connected by means of oblique ropes 5, 5.1, 5.2, ..., 5.n-1 (in Figures 2 and 3 up to 5.4), and maintained blocked in parallel by vertical tape ropes, respectively 6, 6.1, 6.2, ..., 6.n-1 (in Figures 2 and 3 up to 6.4), forming a grid top system 9 consisting of the union of these ropes horizontal, diagonal and vertical; in other words a "compressed spring" system. Other supporting vertical ropes 7, of the length of about one meter, are joined or tied at the bottom of the rope 2 and at the top of the rope 3.n.

The system is therefore formed by a vertical grid 10 constituted by the union of the lower grid 8, comprising the ropes 1, 2, 3, 4, with the upper spring grid 9, comprising the ropes 3.1, 3.2, ..., 3.n, 5, 5.1, 5.2, ..., 5.n-1, 6, 6.1, 6.2, ..., 6.n-1, and kept in vertical position by the hooking of coupling the top rope 3.n in appropriate hooks 11 in turn fixed to an iron wire F, or to the structure of the greenhouse, or alternative to its irrigation system.

The vertical grid 10, fixed to the upper structure of the greenhouse, is positioned next to each row of plants and, by means of the rope 1, down to the foot of each plant included in the row.

As the plants grow they are twisted around the tutor ropes 4.

As soon as the plants arrive at the height of the greenhouse it is possible to bring down the top of them through a first cut of the tape 6 (see Figure 3) placed between the ropes 3, 3.1, causing the first loosening of the grid 9, i.e. the oblique rope 5 blocked by the tape 6 drops down (for example 50-70 cm) and consequently also the underlying plants, causing also a lateral displacement in measure equal to the descent of the plants; this descent of the plant stops in the direction of the support rope 2 vertically leaving the first meter of the plant.

By doing so the first bunches not yet ripe do not touch the ground and anyway as soon as these bunches ripen, and are picked up, the vertical support ropes 7 are cut, and consequently also the first meter at the bottom of the plants is loosened until the ground.

The next descents of the tops of the plants of the row, as soon as they arrive at the height of the greenhouse, will be made by successive cuts in the sequence of the tapes 6.1, 6.2, ..., 6.n, causing a further loosening of the grid 9 until its complete loosening; the plants will drop down and will move sideways.

Another implementation of the tutoring system according to the present invention, illustrated in a preferred embodiment in Figure 3 in its application for the tying of plants placed in a diagonal position, comprises a lower grid 8.1 composed of:
- a rope 1.1 placed at the bottom in a horizontal position in parallel and almost in contact with the ground,
- a horizontal top rope 3.0 positioned parallel to the preceding.

Ropes 4.1, tutor ropes, are arranged vertically and joined or tied from one end down with the base rope 1.1, and from the other end at the top with top rope 3.0.

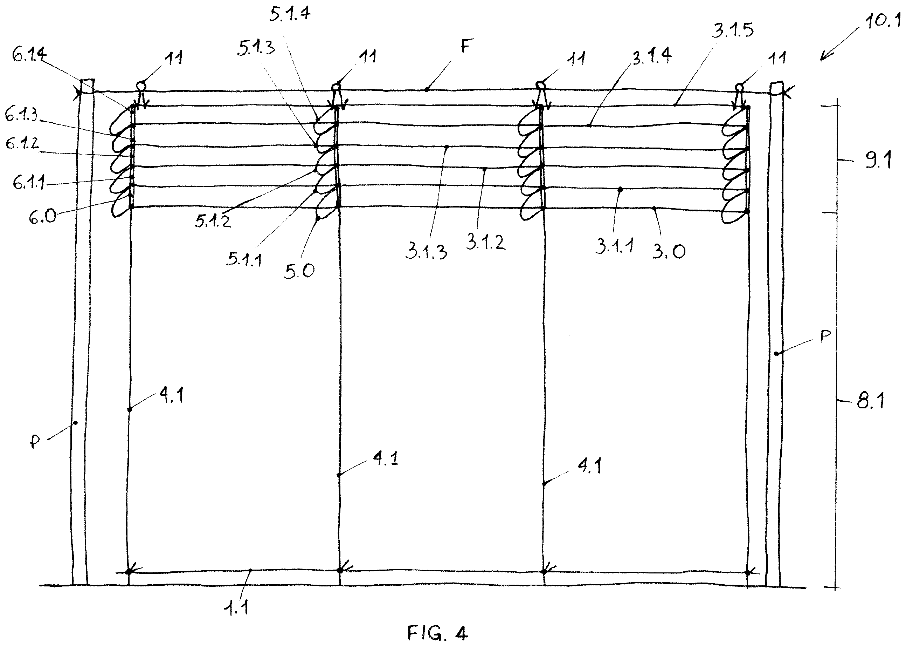

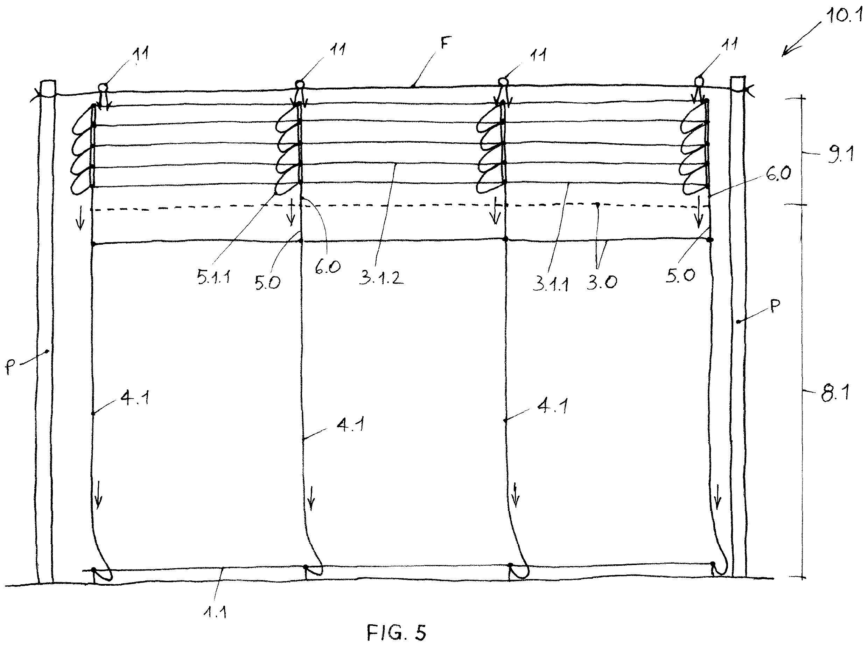

In parallel to the horizontal top rope 3.0 are placed more horizontal ropes in parallel 3.1.1, 3.1.2, ..., 3.1.n, (in Figures 4 and 5 up to 3.1.5), connected to each other by means of vertical ropes 5.0, 5.1.1, 5.1.2, ..., 5.1.n-1 (in Figures 4 and 5 up to 5.1.4), and kept locked and in parallel by using vertical tape ropes, respectively, 6.0, 6.1.1, 6.1.2, ..., 6.1.n-1 (in Figures 4 and 5 up to 6.1.4), shorter than the corresponding vertical ones, thus forming a top grid system 9.1 like "a compressed spring" constituted by the union of said horizontal and vertical ropes.

The system is therefore formed by a vertical grid 10.1 constituted by the union of the lower grid 8.1 comprising the ropes 1.1, 3.0, 4.1 with the upper spring grid 9.1 comprising ropes 3.1.1, 3.1.2, ..., 3.1.n, 5.0, 5.0 .1, 5.1.2, ..., 5.1.n-1, 6.0, 6.1.1, 6.1.2, ..., 6.1.n-1, and kept in a vertical position by hooking top rope 3.1.n in suitable hooks 11 in turn fixed to the structure of the greenhouse, or alternatively to its irrigation system.

The vertical grid 10.1 fixed at the top to the structure of the greenhouse is positioned in line with each row of plants and, through the rope 1.1, down to the foot of each plant included in the row.

As the plants grow are twisted around the rope tutors 4.1.

As soon as the plants arrive at the height of the greenhouse it is possible to bring down the top of them through a first cut of the tape 6.0 (see Figure 5) interposed between ropes 3.0, 3.1.1, causing the first loosening of the grid 9.1, i.e. the vertical rope 5.0 locked by tape 6.0, longer than it, moves downwards (for example 50-70 cm) and consequently also the underlying plants, causing a downward descent.

The next descents of the tops of the plants of the row, as soon arrived at the height of the greenhouse, will be provoked by successive cuts in the sequence of the tapes 6.1.1, 6.1.2, ..., 6.1.n, causing further loosening of the grid 9.1 to its full loosening; the plants will move downwards.

The present invention has been described for illustrative but not limitative purposes, but it is to be understood that those skilled in the art may make variations and/or modifications without departing from the relevant scope of protection, as defined by the enclosed claims.

## Claims

1. Tutoring system for greenhouse cultivation consisting of a grid (10), for tying plants placed in a vertical position, composed of a lower grid (8) comprising:
- a rope (1) located at the bottom in a horizontal position in parallel and almost in contact with the ground,
- a horizontal support rope (2) located in parallel at one meter from said base rope (1),
- a horizontal top rope (3) located in parallel to the preceding ropes,
- vertical tutor ropes (4), one for each plant, joined or tied from one end at the bottom with the base rope (1), from the other end at the top with the top rope (3),
**characterised in that** is connected to an upper grid (9) provided with:
- horizontal ropes (3.1, 3.2, ..., 3.n) parallel to the horizontal top rope (3),
- oblique ropes (5, 5.1, 5.2, ..., 5.n-1), diagonally connected to each of said horizontal ropes (3.1, 3.2, ..., 3.n)
- vertical tape ropes (6, 6.1, 6.2, ..., 6.n-1), orthogonally connected to each of said horizontal ropes (3.1, 3.2, ..., 3.n),
said vertical tape ropes (6, 6.1, 6.2, ..., 6.n-1) are able to be cut **and in that** each of said oblique ropes (5, 5.1, 5.2, ..., 5.n-1) are able to be rotated around the respective junction points with the horizontal ropes (3.1, 3.2, ..., 3.n) to form an extensible system able to vertically descent.

2. Tutoring system for greenhouse cultivation pursuant to claim 1 **characterized by** further vertical support ropes (7), joined or tied at the bottom of the rope (2) and at the top of the greenhouse to its structure or to its irrigation system or to an iron wire (F).

3. Tutoring system for greenhouse cultivation as claimed in claims 1 and 2 consisting of a grid (10) **characterized by** the union of the lower grid (8), composed of the ropes (1, 2, 3, 4), with the upper grid (9), dropdown extendable and formed by horizontal ropes (3.1, 3.2, ..., 3.n), oblique ropes (5, 5.1, 5.2, 5.n-1), and vertical ropes (6, 6.1, 6.2, ..., 6.n- 1).

4. Tutoring system for greenhouse cultivation consisting of a grid (10.1), for tying plants placed in a diagonal position, consisting of a lower grid (8.1) comprising:
- a rope (1.1) located at the bottom in a horizontal position in parallel and almost in contact with the ground,
- a horizontal top rope (3.0) located in parallel to the preceding
- vertical tutor ropes (4.1), joined or tied from one end at the bottom with the base rope (1.1), from the other end at the top with the top rope (3.0),
**characterised in that** is connected to an upper grid (9.1) provided with:
- horizontal ropes (3.1.1, 3.2.1, ..., 3.1.n) parallel to the horizontal top rope (3.0),
- vertical ropes (5.0, 5.1.1, 5.1.2, ..., 5.1.n-1), orthogonally connected to each of said horizontal ropes (3.1.1, 3.1.2, ..., 3.1.n),
- tape ropes (6.0, 6.1.1, 6.1.2, ..., 6.1.n-1), shorter and vertically connected in junction points of said vertical ropes (5.0, 5.1.1, 5.1.2, ..., 5.1.n-1) with each of said horizontal ropes (3.1.1, 3.1.2, ..., 3.1.n),
said tape ropes (6.0, 6.1.1, 6.1.2, ..., 6.1.n-1) are able to be cut **and in that** each of said vertical ropes (5.0, 5.1.1, 5.1.2, ..., 5.1.n-1) are able to vertically extend in the respective junction points with the horizontal ropes (3.1.1, 3.1.2, ..., 3.1.n) to form a dropdown extensible system.

5. Tutoring system for greenhouse cultivation as claimed in claim 4 consisting of a grid (10.1) **characterized by** the union of the lower grid (8.1), composed of the ropes (1.1, 3.0, 4.1), with the upper grid (9.1), dropdown extendable and formed by horizontal ropes (3.1.1, 3.1.2, ..., 3.1.n), vertical ropes (5.0, 5.1.1, 5.1.2, ..., 5.1.n-1), and tape ropes (6.1, 6.1.1, 6.1.2, ..., 6.1.n-1).

6. Tutoring system for greenhouse cultivation according to the preceding claims **characterized in that** the vertical grid (10, 10.1) is positioned next to each row of plants and is fixed at the top of the structure of the greenhouse through coupling the rope (3.n, 3.1.n) to suitable hooks (11) in turn fixed to the structure of the greenhouse, or alternatively to its irrigation system, and, by means of the rope (1, 1.1) at the bottom of the foot of each plant included in the row.

## Patentansprüche

1. Tutorensystem für Gewächshausanbau, bestehend aus einem Gitter (10) zum Anbinden von Pflanzen, die in einer vertikalen Position platziert sind, zusammengesetzt aus einem unteren Gitter (8), umfassend:
- ein Seil (1), das sich im unteren Bereich in einer horizontalen Position parallel und beinahe in Kontakt mit dem Grund befindet,
- ein horizontales Stützseil (2), das sich parallel einen Meter von dem Basisseil (1) entfernt befindet,
- ein horizontales oberes Seil (3), das sich parallel zu den vorhergehenden Seilen befindet,
- vertikale Tutorseile (4), eines für jede Pflanze, die von einem Ende am unteren Bereich mit dem Basisseil (1), von dem anderen Ende im oberen Bereich mit dem oberen Seil (3) angefügt oder angebunden sind,
**dadurch gekennzeichnet, dass** es mit einem oberen Gitter (9) verbunden ist, das ausgestaltet ist mit:
- horizontalen Seilen (3.1, 3.2, ..., 3.n) parallel zu dem horizontalen oberen Seil (3),
- schrägen Seilen (5, 5.1, 5.2, ..., 5.n-1), welche diagonal mit jedem der horizontalen Seile (3.1, 3.2, ..., 3.n) verbunden sind,
- vertikalen Bandseilen (6, 6.1, 6.2, ..., 6.n-1), welche rechtwinklig mit jedem der horizontalen Seile (3.1, 3.2, ..., 3.n) verbunden sind,
wobei die vertikalen Bandseile (6, 6.1, 6.2, ..., 6.n-1) geschnitten werden können, **und dadurch, dass** jedes der schrägen Seile (5, 5.1, 5.2, ..., 5.n-1) um die jeweiligen Kreuzungspunkte mit den horizontalen Seilen (3.1, 3.2, ..., 3.n) gedreht werden kann, um ein verlängerbares System zu bilden, welches vertikal absteigen kann.

2. Tutorensystem für Gewächshausanbau nach Anspruch 1, **gekennzeichnet durch** weitere vertikale Stützseile (7), die an dem unteren Bereich des Seils (2) und an dem oberen Bereich des Gewächshauses an dessen Struktur oder an dessen Bewässerungssystem oder an einem Eisendraht (F) angefügt oder angebunden sind.

3. Tutorensystem für Gewächshausanbau nach den Ansprüchen 1 und 2, bestehend aus einem Gitter (10), das durch die Vereinigung des unteren Gitters (8), das aus den Seilen (1, 2, 3, 4) zusammengesetzt ist, mit dem oberen Gitter (9) gekennzeichnet ist, in Abwärtsrichtung verlängerbar ist und durch horizontale Seile (3.1, 3.2, ..., 3.n), schräge Seile (5, 5.1, 5.2, 5.n-1) und vertikale Seile (6, 6.1, 6.2, ..., 6.n-1) gebildet ist.

4. Tutorensystem für Gewächshausanbau, bestehend aus einem Gitter (10.1) zum Anbinden von Pflanzen, die in einer diagonalen Position platziert sind, bestehend aus einem unteren Gitter (8.1), umfassend:
- ein Seil (1.1), das sich im unteren Bereich in einer horizontalen Position parallel und beinahe in Kontakt mit dem Grund befindet,
- ein horizontales oberes Seil (3.0), das sich parallel zu den vorhergehenden Seilen befindet,
- vertikale Tutorseile (4.1), die von einem Ende am unteren Bereich mit dem Basisseil (1.1), von dem anderen Ende im oberen Bereich mit dem oberen Seil (3.0) angefügt oder angebunden sind,
**dadurch gekennzeichnet, dass** es mit einem oberen Gitter (9.1) verbunden ist, das ausgestaltet ist mit:
- horizontalen Seilen (3.1.1, 3.2.1, ..., 3.1.n) parallel zu dem horizontalen oberen Seil (3.0),
- vertikalen Seilen (5.0, 5.1.1, 5.1.2, ..., 5.1.n-1), die rechtwinklig mit jedem der horizontalen Seile (3.1.1, 3.1.2, ..., 3.1.n) verbunden sind,
- Bandseilen (6.0, 6.1.1, 6.1.2, ..., 6.1.n-1), die kürzer und vertikal an Kreuzungspunkten der vertikalen Seile (5.0, 5.1.1, 5.1.2, ..., 5.1.n-1) mit jedem der horizontalen Seile (3.1.1, 3.1.2, ..., 3.1.n) verbunden sind,
wobei die Bandseile (6.0, 6.1.1, 6.1.2, ..., 6.1.n-1) geschnitten werden können, **und dadurch, dass** jedes der vertikalen Seile (5.0, 5.1.1, 5.1.2, ..., 5.1.n-1) in den jeweiligen Kreuzungspunkte mit den horizontalen Seilen (3.1.1, 3.1.2, ..., 3.1.n) vertikal verlängert werden kann, um ein in Abwärtsrichtung verlängerbares System zu bilden.

5. Tutorensystem für Gewächshausanbau nach Anspruch 4, bestehend aus einem Gitter (10.1), das durch die Vereinigung des unteren Gitters (8.1), das aus den Seilen (1.1, 3.0, 4.1) zusammengesetzt ist, mit dem oberen Gitter (9.1) gekennzeichnet ist, in Abwärtsrichtung verlängerbar ist und durch horizontale Seile (3.1.1, 3.1.2, ..., 3.1.n), vertikale Seile (5.0, 5.1.1, 5.1.2, ..., 5.1.n-1) und Bandseile (6.1, 6.1.1, 6.1.2, ..., 6.1.n-1) gebildet ist.

6. Tutorensystem für Gewächshausanbau nach den vorhergehenden Ansprüchen, **dadurch gekennzeichnet, dass** das vertikale Gitter (10, 10.1) neben jeder Reihe von Pflanzen positioniert ist und im oberen Bereich der Struktur des Gewächshauses fixiert ist, indem das Seil (3.n, 3.1.n) mit geeigneten Haken (11) gekoppelt wird, die wiederum an der Struktur des Gewächshauses oder alternativ an dessen Bewässerungssystem fixiert sind, und mittels des Seils (1, 1.1) im unteren Bereich am Fuß jeder Pflanze fixiert ist, die in die Reihe eingeschlossen ist.

## Revendications

1. Système de tuteur pour la culture en serre, constitué par une grille (10) pour attacher des plantes placées dans une position verticale, composée d'une grille inférieure (8) comprenant :
- un câble (1) situé dans le bas dans une position horizontale, parallèlement au sol et presque en contact avec celui-ci,
- un câble support horizontal (2) situé parallèlement audit câble de base (1) à un mètre de celui-ci,
- un câble supérieur horizontal (3) situé parallèlement aux câbles précédents,
- des câbles tuteurs verticaux (4), un pour chaque plante, assemblés ou attachés au niveau d'une extrémité dans le bas au câble de base (1), au niveau de l'autre extrémité dans le haut au câble supérieur (3)
**caractérisé en ce que** la grille inférieure est reliée à une grille supérieure (9) pourvue :
- de câbles horizontaux (3.1, 3.2, ..., 3.n) parallèles au câble supérieur horizontal (3),
- de câbles obliques (5, 5.1, 5.2, ..., 5.n-1), reliés en diagonale à chacun desdits câbles horizontaux (3.1, 3.2, ..., 3.n)
- des câbles en ruban verticaux (6, 6.1, 6.2, ..., 6.n-1), reliés orthogonalement à chacun desdits câbles horizontaux (3.1, 3.2, ..., 3.n),
lesdits câbles en ruban verticaux (6, 6.1, 6.2, ..., 6.n-1) pouvant être coupés **et en ce que** chacun desdits câbles obliques (5, 5.1, 5.2, ..., 5.n-1) peut être tourné autour des points de jonction respectifs avec les câbles horizontaux (3.1, 3.2, ..., 3.n) pour former un système extensible pouvant descendre verticalement.

2. Système de tuteur pour la culture en serre selon la revendication 1, **caractérisé par** d'autres câbles support verticaux (7), assemblés ou attachés dans le bas au câble (2) et dans le haut de la serre à sa structure ou à son système d'irrigation ou à un fil de fer (F).

3. Système de tuteur pour la culture en serre selon les revendications 1 et 2, constitué par une grille (10) **caractérisée par** la réunion de la grille inférieure (8), composée des câbles (1, 2, 3, 4), avec la grille supérieure (9), extensible vers le bas et formée par des câbles horizontaux (3.1, 3.2, ..., 3.n), des câbles obliques (5, 5.1, 5.2, 5.n-1) et des câbles verticaux (6, 6.1, 6.2, ..., 6.n- 1).

4. Système de tuteur pour la culture en serre constitué par une grille (10,1), pour attacher des plantes placées dans une position diagonale, constituée par une grille inférieure (8,1) comprenant :
- un câble (1,1) situé dans le bas dans une position horizontale parallèlement au sol et presque en contact avec celui-ci,
- un câble supérieur horizontal (3,0) situé parallèlement aux câbles précédents
- des câbles tuteurs verticaux (4,1), assemblés ou attachés au niveau d'une extrémité dans le bas au câble de base (1,1), au niveau de l'autre extrémité dans le haut au câble supérieur (3.0),
**caractérisé en ce que** la grille inférieure est reliée à une grille supérieure (9,1) pourvue :
- de câbles horizontaux (3.1.1, 3.2.1, ..., 3.1.n) parallèles au câble supérieur horizontal (3.0),
- de câbles verticaux (5.0, 5.1.1, 5.1.2, ..., 5.1.n-1) reliés orthogonalement à chacun desdits câbles horizontaux (3.1.1, 3.1.2, ..., 3.1.n),
- des câbles en ruban (6.0, 6.1.1, 6.1.2, ..., 6.1.n-1), plus courts et reliés verticalement au niveau des points de jonction desdits câbles verticaux (5.0, 5.1.1, 5.1.2, ..., 5.1.n-1) à chacun desdits câbles horizontaux (3.1.1, 3.1.2, ..., 3.1.n),
lesdits câbles en ruban (6.0, 6.1.1, 6.1.2, ..., 6.1.n-1) pouvant être coupés **et en ce que** chacun desdits câbles verticaux (5.0, 5.1.1, 5.1.2, ..., 5.1.n-1) peut s'étendre verticalement au niveau des points de jonction respectifs avec les câbles horizontaux (3.1.1, 3.1.2, ..., 3.1.n) pour former un système extensible vers le bas.

5. Système de tuteur pour la culture en serre selon la revendication 4, constitué par une grille (10.1) **caractérisée par** la réunion de la grille inférieure (8.1), composée des câbles (1.1, 3.0, 4.1), avec la grille supérieure (9.1), extensible vers le bas et formée par des câbles horizontaux (3.1.1, 3.1.2, ..., 3.1.n), des câbles verticaux (5.0, 5.1.1, 5.1.2, ..., 5.1.n-1) et des câbles en ruban (6.1, 6.1.1, 6.1.2, ..., 6.1.n-1).

6. Système de tuteur pour la culture en serre selon les revendications précédentes, **caractérisé en ce que** la grille verticale (10, 10,1) est positionnée à côté de chaque rangée de plantes et est fixée dans le haut de la structure de la serre par accouplement du câble (3.n, 3.1.n) à des crochets appropriés (11) fixés à leur tour à la structure de la serre, ou encore à son système d'irrigation, et, au moyen du câble (1, 1,1) dans le bas du pied de chaque plante comprise dans la rangée.
